# EUROPEAN PATENT APPLICATION

(11) **EP 2 022 335 A1**
(43) Date of publication of application: **11.02.2009**
(21) Application number: 06725829.3
(22) Date of filing: 27.03.2006
(51) Int. Cl.: A23G 1/02

(54) **METHOD FOR CHANGING COLOUR AND PH IN THE PRODUCTION OF A HIGHLY-SOLUBLE, FIBRE-RICH COCOA EXTRACT, AND USE OF SAID EXTRACT**

(30) Priority: 27.03.2006 ES 200600791
(71) Applicant: Natraceutical Industrial S.L.U., 46930 Quart De Poblet (ES)
(72) Inventor: MOULAY, Leila, 46930 Quart de Poblet (ES); IBARRA, Alvin, 46930 Quart de Poblet (ES); VILANOVA, Olga, 46930 Quart de Poblet (ES)
(74) Representative: Gonzalez-Alberto Rodriguez, Natalia
(86) International application number: PCT/ES2006/000144
(87) International publication number: WO 2007/110452

(57) **Abstract**

Method for changing colour and pH in the production of a highly-soluble, fibre-rich cocoa extract of the type used as a fibre supplement in food, essentially **characterized in that** it comprises six mandatory and three optional phases or steps, namely: mandatory phases or steps sterilization or roasting of the raw material, the two processes being mutually exclusive: enzyme treatment in order to promote extraction of the soluble components; separation of the solid phase: concentration of the liquid phase; drying of the above concentrated; optional phases or steps - grinding the shell; adding presscake; alkalinisation.

## Description

### Field of the Invention

The object of the present invention as expressed in the title of this specification consists of a method for changing color and pH in the production of a cocoa extract highly soluble in any liquid, and especially in dairy products. To that end, alkalization is necessary.

One of the main objectives of alkalinizing the soluble cocoa extract is to increase its pH and be able to use it in milk applications.

The pH of normal milk is between 6.5 and 6.7, however, the reduction of the pH of milk occurring by adding a common acid affects the solubility of casein. During acidification, the protecting sub-unit of the protein is inactivated, which allows the micelles to aggregate, causing the milk to clot/curd.

Casein micelle is chemically destabilized, agglomeration occurring due to the reduction of its charge until reaching the isoelectric point. At the same time, the acidity of the medium increases the solubility of minerals, therefore the organic calcium and phosphorus contained in the micelle gradually become soluble in the aqueous phase. Finally, the micelles are disintegrated and the casein precipitates, resulting in clot formation.

Due to the foregoing, the cocoa extract is alkalinized to prevent the milk protein from precipitating during the storage of the milkshakes containing this product.

In addition, the beneficial effects of the dietary fiber are many, mainly affecting the digestion and metabolism of certain substances. Scientific evidence that suitable fiber consumption can have preventive effects against chronic diseases, such as different types of cancer, diabetes, constipation, cardiovascular diseases and obesity, has also come to light in recent years.

Regular fiber consumption reduces blood cholesterol content, which means less risk of cardiovascular disorders. The benefits of soluble fiber are broader. It balances cholesterol level, controls the rise of blood glucose and also aids in the regulation of intestinal transit.

The FDA recommends a dietary fiber intake between 30 and 40 g/day distributed in 30% insoluble fiber and 70% soluble fiber for adults.

The disclosure of the positive effects of fiber has been conducive to the industrial development of a number of fiber-rich dietary supplements and foods.

This patent describes the method of obtaining a soluble, dietary fiber-rich cocoa extract from cocoa shells, or cocoa shells and cocoa presscake, in which method the raw material is subjected to a heat treatment to darken the color and change its organoleptic properties, as well as the alkalization conditions of the soluble cocoa extract to increase its pH. The obtained extract is ideal for its use as an ingredient in food and pharmaceutical products.

### State of the Art

Application PCT/ES2005/000377 describes a method in which a soluble cocoa extract is obtained from non-roasted cocoa husk and/or presscake. In said patent, neither roasting nor alkalization is contemplated in the method of manufacture. For example, in the soluble cocoa extract obtained by the method of the patent, the final color of the product according to CIE* Lab gives a color profile of L: 44.71; a: 6.54 and b: 12.33. Furthermore, the end product has a pH between 4.5 and 5.0.

During the roasting process a characteristic reaction called a Maillard reaction, which occurs after 100°C, occurs between the carbonyl groups (-C = O) of some sugars and the free amino groups (- NH₂) which can exist in the proteins or free amino acids of the shell. This reaction leads to browning and caramelization of the surface layer, providing very particular and valued sensory qualities. The Maillard reaction positively affects the sensory value of food due to changes of color and flavor.

The cocoa industry normally uses alkalis for the purpose of producing darker products intended for specific applications. Thus, for example, United States law allows adding compounds in order to alkalinize cocoa derivatives, including ammonium, potassium or sodium bicarbonates; ammonium, potassium or sodium carbonates; and ammonium, potassium or sodium hydroxides.

Alkalization of the cocoa derivatives, especially cocoa powder has two main purposes. On one hand, it increases the pH of the product, which in normal conditions is about 5, up to values close to 9; this allows using the cocoa powder in applications such as milk beverages. On the other hand, the increase of pH gives rise to a significant change of color. Thus, the most alkalized cocoa powders allow their use in applications in which a darker color is sought, which is related to a chocolate appearance, an effect sought by many chocolate and confectionery manufacturers.

The product developed in this invention uses cocoa shells and presscake as the main raw materials.

The shell contains approximately more than 40% dietary fiber (20% cellulose, 12% hemicellulose and 12% galacturonic acids). The shell also contains protein (15%), lignin (13%, Klason method), minerals (13%), lipids (2%), carbohydrates (2% as starches and sugars), theobromine (1%), and other compounds such as polyphenols, tannins and caffeine.

Cocoa shell is a product that has recently been used in several food and pharmaceutical applications.

In some methods intended only for the production of cocoa butter, (hydraulic or expeller) press systems are used to separate the butter from the whole bean. Cocoa butter and a by-product, which is a mixture of partially defatted shell and seed, are obtained in the method; this by-product is commonly known as presscake.

The presscake contains approximately 45% dietary fiber (6% soluble and 39% insoluble). It further contains proteins (24%), fats (12%), and other minority compounds such as polyphenols, theobromine and caffeine.

Some applications of the shell and presscake have been protected for manufacturing products for food and pharmaceutical use which do not, however, affect the invention described in this patent.

Patent ES 2099676B1 protects an ingredient for human consumption intended for food and pharmacy, mainly in the dietary area. This ingredient is based on roasting the shell, and it further describes its nutritional composition. However, this document does not describe that the shell is previously treated nor does it describe the conditions of the method for obtaining the ingredient.

Patent US 0052910 describes the method of obtaining a soluble cocoa fiber from shell, using an aqueous extraction. In this method, the inventors use hot water during the extraction at a temperature between 100°C to 130°C. No catalysts of any type are used in the method. The soluble fiber is then purified using activated carbon treatments, resin treatments, UF concentration, precipitation with solvents, and finally separation of minerals through dialysis or with an iron exchange resin. This product is intended for its application with proteins in food, such as milk beverages, stabilizers for cocoa beverages, coating agents with a wide range of applications, starch aging reducing agent in food, and food and beverage shelf life extending agent.

Patent US 4948600 describes a method for preparing a product rich in cocoa dietary fiber from conventional cocoa powder. In this invention the product is obtained by removing the starch from the cocoa powder. The starch is degraded enzymatically and is then extracted with continuous washings through a separating step. Finally, the low-starch cocoa is dried. With this method, a product with a content of dietary fiber between 35% and 75% is obtained. In this product the insoluble fiber concentration is greater than the soluble fiber content. The end product is suitable for producing for example: dietary fiber-rich chocolate, dietary fiber-rich chocolate beverages, dietary-fiber rich chocolate sauces, and dietary fiber-rich candies.

Patent US 4156030 describes a method for obtaining an extract from shells using acidified ethanol. In this method, the shell is ground and the extraction is carried out at reflux temperature, in which the solution contains between 80% to 90% ethanol and 10 to 15% (hydrochloric, phosphoric, citric or tartaric) acid. After the extraction the ethanol is evaporated and the concentrate is dried.

### Description of the Invention

The invention describes methods for changing color and pH of a highly-soluble cocoa extract.

The raw materials that can be used in the method for obtaining a highly-soluble cocoa extract can be shells or a mixture of cocoa shells and presscake.

The novel method comprises a total of eight phases or steps, some of which are optional, all possible steps being listed below:
- Grinding the shell (optional).
- Adding presscake to the shell (optional).
- Sterilization or roasting (mutually exclusive phases).
- Enzyme treatment for the purpose of promoting the extraction of soluble components.
- Alkalization (optional).
- Separation of the solid phase and continuing the method with the liquid phase.
- Concentration of the liquid phase.
- Drying of the liquid phase concentrate.

Grinding the shell:
This step is optional given that the rest of the method can be carried out with the conventional particle size of the shell and has the purpose of achieving additional darkening of the end product, the highly-soluble, fiber-rich cocoa extract.

It has been shown that the particle size of the raw material is directly correlated with the luminosity of the end product (measured by CIE*Lab). Thus, the smaller the particle is the lower luminosity will be, and therefore the color of the soluble extract will be darker.

This darkening effect of the end product is desirable due to the fact that the soluble cocoa extract thus improves its sensory properties, being closer to the profile of conventional cocoa.

The raw material particles originally have a very high variation in their sizes. Thus for example, 91% of shells have a size between 15 and 6 mm. For the grinding step, the shell is subjected to the action of a suitable mill until reaching a particle size of less than 1 mm, and preferably less than 0.2 mm in 99% of the ground product.

Adding presscake to the shell:
This step is also optional given that the entire method can be carried out without the presence of cocoa presscake. This mixture is carried out in the same extractor in which the enzyme treatment will be carried out. The proportion of this mixture is in parts of shell per parts of presscake of approximately (7:3) to (9: 1), and preferably (8:2), 80% shell per 20% presscake.

Sterilization or roasting:
These steps are mutually exclusive; therefore either one or the other is carried out, but never both.

In any event, it is always necessary to reduce the microbial load of the raw material to be treated, sterilization being the suitable treatment for this purpose. In addition, darkening of the material is sought with roasting, however, heat treatment involving roasting also has the reduction of the microbial load as an effect; therefore in cases in which roasting is performed, an independent sterilization process is not necessary.

### -Sterilization

The sterilization step can be carried out in a reactor provided with a heat exchange chamber and a stirring system, specifically through moist heat by means of vapor at a temperature between 100°C and 125°C, for a time comprised between 15 minutes and one hour, preferably at a temperature of 121°C for 30 minutes.

### -Roasting

As previously mentioned, this step involves two effects, one on the color and the other on the microbial load.

The raw material is roasted for the purpose of preferably generating compounds derived from the Maillard reaction. These reactions positively affect the sensory profile of the end product due to the fact that they improve the aroma and flavor as well as the color, making it darker. The roasting is preferably carried out by dry roasting at temperatures between 120° and 180°C and for a time period of greater than 30 minutes, but preferably less than 4 hours, for example 160°C for 1 hour.

The conditions of the described heat treatment in turn involve a decrease of the microbial load equivalent to conventional sterilization.

Enzyme treatment:
During this step, the sterile raw material, sterilized by roasting or by direct sterilization, is diluted with water at a ratio of (1:7) in an extractor and is taken to a temperature between 75°C and 50°C, preferably 55°C. When the suitable temperature is reached, the enzyme is added for the hydrolysis, preferably a beta-glucanase, and the mixture is stirred for a time between 1 to 3 hours, preferably 1.6 hours. After this time the step is considered to be completed.

Alkalization:
This step is optional and relates to the alkalization of the acid compounds present in the raw material.

Galacturonic acids are primarily responsible for the acidity of the end product.

The pH of the product obtained in the method described in patent application PCT/ES2005/000377 ranges between 4.5 and 5.0. This is an ideal product for many applications; however, in some applications such as milk beverages, it is preferable to increase the pH and put it close to neutrality, since it facilitates the casein stability.

The end pH of the product must be comprised between a value greater than 5 and less than 9; preferably between 6.5 and 7.

For the alkalization of this product alkaline reagents approved for use in cocoa by the corresponding legislation must be used because the end product must be fit for human consumption. Thus, for example, ammonium bicarbonate, potassium bicarbonate, sodium bicarbonate, ammonium carbonate, potassium carbonate, sodium carbonate, ammonium hydroxide, potassium hydroxide, sodium hydroxide, magnesium carbonate, or magnesium oxide can be used.

The alkali is added once the enzyme treatment step is completed. This alkali can be added directly to the extraction tank, or it can be previously diluted for the purpose of facilitating its dissolution, preferably performing the dilution in water.

The amount of alkali added, the concentration, as well as the reaction time must be taken into account during the process in order to obtain the desired pH in the end product.

Separation:
In this step, solids are separated using a centrifuge. A solid phase, which is removed, and a liquid phase, which is used to continue the method, is thus achieved.

Concentration:
After the solid separation step, the liquid phase obtained contains approximately 2% total solids. However it is necessary to carry out a concentration until obtaining at least 20% total solids in the concentrate, this being an optimum value for continuing to the drying phase.

The concentration is preferably carried out in a triple-effect concentrator, at a temperature of approximately 60°C to 75°C, preferably 70°C.

Drying:
In this step, the concentrated liquid containing at least 20% solid extract is dried in a spray drier until reaching moisture in the cocoa extract between 2 to 7%.

After this step the finished end product is highly-soluble, fiber-rich cocoa extract with a considerably darker color than that of a conventional extract (being darker depending on how many optional steps have been performed) and with a less acid pH (if the optional alkalization phase has been performed).

### Examples

Example 1. Change of luminosity according to particle size of the raw material.

In said example, three tests have been carried out for obtaining the highly-soluble, fiber-rich cocoa extract, varying in each one of them the particle size of the raw material, i.e., cocoa shells. The first step is to roast the shell at 120°C for one hour and subsequently said shell has been ground and sieved until obtaining a particle size (99% < 1 mm).

The roasted and sieved raw material was mixed with water at a raw material: water concentration of 1:7. Said mixture was then heated in the extractor up to 55°C, 0.05% of Ultraflo L (Novozyme) commercial enzyme was added. The mixture was stirred continuously for 1.5 hours. After the enzyme treatment time, the mixture was centrifuged and clarified until obtaining a liquid phase which was then concentrated at 60°C in a triple-effect concentrator and was stored in an auxiliary tank and dried in a spray drier. The luminosity of the end product was determined according to the CIE* Lab method. Table 1 shows the obtained results.

**Table 1: Color of the end product according to the particle size of the raw material roasted at 120°C - 1 hour.**

| Particle size | | < 1 mm |
|---|---|---|
| Color of the cocoa extract | L | 36.36 |
| | a | 6.39 |
| | b | 8.90 |

Example 2. Changing the luminosity of the highly-soluble cocoa extract depending on the roasting temperature of the raw material.

In this example, the raw material, cocoa shells, was roasted at different temperatures and different times for the purpose of obtaining a reduction of the luminosity of the end product.

The cocoa shells were roasted at 120, 150 and 180°C for one and three hours and were mixed with presscake at a ratio of (8:2).

The roasted raw material was mixed with water at a raw material: water concentration of 1:7. Said mixture was then heated in the extractor up to 55°C, 0.05% of Ultraflo L (Novozyme) commercial enzyme was added. The mixture was stirred continuously for 1.5 hours. After the enzyme treatment time, the mixture was centrifuged and clarified until obtaining a liquid phase which was then concentrated at 60°C in a triple-effect concentrator and was stored in an auxiliary tank and dried in a spray drier. The luminosity of the end product was determined according to the CIE* Lab method. Table 2 shows the obtained results.

**Table 2: Color of the end product according to the roasting temperature of the raw material**

| Parameter | | 120°C-1h | 150°C-1h | 180°C-1h | 120°C-3h | 180°C-3h |
|---|---|---|---|---|---|---|
| Color of the cocoa extract | L | 51.13 | 44.44 | 38.82 | 38.59 | 38.5 |
| | a | 6.71 | 6.77 | 5.69 | 7.35 | 5.18 |
| | b | 14.33 | 11.73 | 9.44 | 10.08 | 8.41 |

Example 3. Alkalization with sodium carbonate (Na₂CO₂).

In this example, three processes were carried out for the purpose of obtaining an alkalinized highly-soluble, fiber-rich cocoa extract.

Shell and presscake (80% and 20%) were used as the raw material for the three processes, which were sterilized with direct vapor in the reactor for the purpose of reducing the microbial load. After heat treatment, the raw material was mixed in the extractor with water at a ratio of 1:7. The mixture was then heated in the extractor up to 55°C and 0.05% of Ultraflo L (Novozyme) commercial enzyme was added. The mixture was stirred for 1.5 hours.

Once the enzyme treatment was completed, alkali (sodium carbonate, 75g/L Na₂CO₃) was added in the extractor for the purpose of adjusting the pH.

After neutralization, the three mixtures were centrifuged and clarified for obtaining a liquid phase which was concentrated at 60°C in a triple-effect concentrator, and dried in a spray drier. The measurement of the pH in the end product was carried out according to method (AOAC 1990).

Table 3 shows the obtained results.

**Table 3: Amount of Na₂CO₃ consumed and pH of the end product.**

| Test | mL Na₂CO₃ | pH |
|---|---|---|
| 1 | 27 | 5.35 |
| 2 | 72 | 6.00 |
| 3 | 130 | 6.83 |

Example 4. Alkalization with potassium carbonate (K₂CO₃).

In this example, three processes were carried out for the purpose of optimizing the use of potassium carbonate as a reagent, and finally a fourth process was tested to prove the effectiveness of the model.

Shell and presscake (80% and 20%) were used as the raw material for the three processes, which were sterilized with direct vapor in the reactor for the purpose of reducing the microbial load. After heat treatment, the raw material was mixed in the extractor with water at a ratio of 1:7. The mixture was then heated in the extractor up to 55°C and 0.05% of Ultraflo L (Novozyme) commercial enzyme was added. The mixture was stirred for 1.5 hours.

Once the enzyme treatment was completed, the alkali (potassium carbonate, 50% K₂CO₃) was added in the extractor for the purpose of adjusting the pH. The pH was determined with the AOAC method (1990).

After alkalization, the three mixtures were centrifuged and clarified for obtaining a liquid phase which was concentrated at 60°C in a triple-effect concentrator, and dried in a spray drier.

With the obtained data a line relating the amount of alkali added in the extractor and the pH of the end product was constructed. The graph and the equation are shown below in figure 4. Table 4, which describes the pH values and the amounts of alkali consumed, is also shown below.

**Table 4: Amount of K₂CO₃ consumed and pH of the end product.**

| test | mL K₂CO₃ | pH |
|---|---|---|
| 1 | 3.00 | 6.00 |
| 2 | 7.00 | 6.70 |
| 3 | 13.50 | 7.58 |
| 4 | 6.09 | 6.60 |

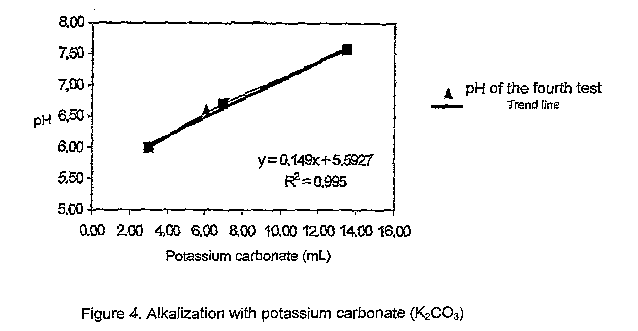

For the purpose of proving the optimization model, an additional experiment was carried out for the purpose of reaching a theoretical final value of pH 6.50, a value of 6.60 being reached in the actual product. Therefore, the model could predict the pH in the end product with a difference of 1.5%.

## Claims

1. A method for changing color and pH in the production of a highly-soluble, fiber-rich cocoa extract of the type used as a fiber supplement in food, comprising six mandatory and three additional phases or steps, namely:
mandatory phases or steps
- sterilization or roasting of the raw material, these steps being mutually exclusive
- enzyme treatment for the purpose of promoting extraction of the soluble components
- separation of the solid phase and continuing with the liquid phase
- concentration of the liquid phase
- drying of the liquid phase concentrate
additional phases or steps
- grinding the shell
- adding presscake
- alkalization

2. The method according to claim 1, **characterized** wherein the sterilization step is carried out in a reactor provided with a heat exchange chamber and a stirring system, through moist heat at a temperature between 100°C and 125°C, for a time between 15 minutes and one hour, preferably at a temperature of 121°C for 30 minutes.

3. The method according to claim 1, wherein the roasting step is carried out in a reactor preferably by dry roasting, at temperatures between 120° and 180°C, and for a time period between 30 minutes to 4 hours.

4. The method according to the previous claim, **characterized in that** the roasting is carried out at 160°C for 1 hour.

5. The method according to the preceding claims, wherein in the enzyme treatment step, the sterile raw material, sterilized by means of roasting or direct sterilization, is diluted with water at a ratio of (1:7) in an extractor and is carried out at a temperature between 75°C and 50°C, at which time the enzyme is added for the hydrolysis and the mixture is stirred for a time between 1 to 3 hours.

6. The method according to the previous claim, **characterized in that** the sterile raw material diluted in water is heated until reaching 55°C.

7. The method according to claim 6, **characterized in that** the enzyme used is preferably a beta-glucanase.

8. The method according to claim 6, **characterized in that** the stirring of the mixture is carried out for 1.5 hours.

9. The method according to the preceding claims, wherein the separation step is preferably carried out in a centrifuge, removing the solid phase and continuing the method with the liquid phase which contains approximately 2% total solids.

10. The method according to the preceding claims, wherein the concentration step is preferably carried out in a triple-effect concentrator, at a temperature between 60°C and 75°C until reaching a concentration of at least 20% total solids in liquid.

11. The method according to the previous claim, **characterized in that** the concentration is carried out at a temperature of 70°C.

12. The method according to the preceding claims, wherein in the drying step, the liquid concentrate containing at least 20% solid extract is subjected to the action of a spray drier until reaching moisture in the cocoa extract between 2 to 7%.

13. The method according to claim 1, wherein before the sterilization step or the roasting step, according to which of them is performed, an additional phase is performed, comprising grinding the cocoa shells until reaching a particle size of less than 1 mm in 99% of the ground product.

14. The method according to the previous claim, **characterized in that** the particle size of the ground shells is preferably less than 0.2 mm in 99% of the ground material.

15. The method according to the preceding claims, **characterized in that** before the sterilization step or the roasting step, according to which of them is performed, and after the possible grinding of the shell, an additional phase is performed, consisting of adding presscake at a ratio from (7:3) 70% shell per 30% presscake to (9:1) 90% shell per 10% presscake.

16. The method according to the preceding claim, **characterized in that** the ratio of cocoa shells and presscake is preferably (8:2), 80% shell per 20% presscake.

17. The method according to the preceding claims, wherein after the enzyme treatment and before the separation, an additional phase consisting of alkalization is performed, in which phase an alkali is added in a suitable amount and concentration to obtain an end product with a pH greater than 5.0 and less than 9.0.

18. The method according to the preceding claims, **characterized in that** after the enzyme treatment and before the separation, an additional phase consisting of alkalization is performed, in which phase an alkali is added in a suitable amount and concentration to obtain an end product with a pH of 6.5.

19. The method according to claims 1, 17, and 18, wherein the compounds to be used in the alkalization are selected from the group: ammonium bicarbonate, potassium bicarbonate, sodium bicarbonate, ammonium carbonate, potassium carbonate, sodium carbonate, ammonium hydroxide, potassium hydroxide, sodium hydroxide, magnesium carbonate, or magnesium oxide.

20. The method according to the preceding claim, wherein the compounds to be used are added preferably dissolved in water.

21. A use of the highly-soluble, fiber-rich cocoa extract obtained according to claims 1, 17, 18, 19 and 20 to form part of the formulation of milk beverages such as cocoa milkshakes, in which case milk proteins do not destabilize due to the pH.

22. A use of the highly-soluble, fiber-rich cocoa extract obtained according to claims 1 to 20 to form part of the formulation of bread, bakery and pastry products.

23. A use of the highly-soluble, fiber-rich cocoa extract obtained according to claims 1 to 20 to form part of the formulation of candy, chocolate and chocolate bar products.

24. A use of the highly-soluble, fiber-rich cocoa extract in the categories of products described in claims 21, 22 and 23, wherein said extract contributes to an improvement in the sensory profile of the applications directly affecting the color, aroma and flavor of the applications.

25. A use of the highly-soluble cocoa extract in the categories of products described in claims 21, 22, 23 and 24, wherein said extract increases the soluble dietary fiber content of the applications.
